# EUROPEAN PATENT SPECIFICATION

(11) **EP 3 939 418 B1**
(45) Date of publication and mention of the grant of the patent: **13.12.2023**
(21) Application number: 19919111.5
(22) Date of filing: 11.03.2019
(51) Int. Cl.: A01K 29/00, G06Q 50/02

(54) **AUTOMATED LIVESTOCK MANAGEMENT SYSTEM**
AUTOMATISIERTES VIEHVERWALTUNGSSYSTEM
SYSTÈME DE GESTION AUTOMATISÉ DU BÉTAIL

(43) Date of publication of application: 19.01.2022
(73) Proprietor: Eco-Pork Co., Ltd., Tokyo, 130-0003 (JP)
(72) Inventor: NISHIMURA, Kentaro, Tokyo 154-0016 (JP)
(74) Representative: Fédit-Loriot
(86) International application number: PCT/JP2019/009806
(87) International publication number: WO 2020/183590

(56) References cited:
- WO-A1-2017/159109
- WO-A2-2014/197445
- JP-A- H 078 128
- JP-A- 2005 102 632
- JP-A- 2013 247 941
- KR-A- 20130 126 333
- KR-A- 20170 001 044

## Description

### TECHNICAL FIELD

The present invention relates to a system for managing livestock, and more particularly to an automatic livestock management system that automatically manages and controls a livestock environment based on various numerical values obtained from various measuring devices to achieve a most proper livestock environment and efficient livestock farming.

### BACKGROUND ART

In order to prepare a livestock environment in the livestock industry handling livestock such as cattle, pigs and chickens, computers have been often introduced, systematized, and managed. On sites of the livestock farming, various information, such as the temperature and humidity, on livestock farms is collected and used for the livestock farming to manage the livestock farms in a unified manner. This increases the efficiency in the livestock farming and solves the problem of labor shortage.

In recent years, a system for collecting all types of data related to livestock for each livestock or for each group of a certain number of animals and then managing the livestock has been used, which allows more detailed management.

JP H07 8128 A, which is considered to be the prior art closest to the claimed invention, discloses a livestock breeding management support system using a neural network, in which the growth of livestock is predicted at a specific measurement stage in the breeding process and environmental data of the barn are collected and analysed.

As a technique related to such a livestock management system, there is Japanese Unexamined Patent Publication No. 2013-247941. Disclosed here is a livestock management system for supporting the pig farming industry. The system includes a server computer that manages livestock information in real time, associates the following information upon request by a manager terminal, and stores and reads the associated information in and from a database. The information includes breeding livestock information managed individually, non-breeding livestock information managed in groups, and barn information. According to the disclosure, this technique reduces the works of inputting data on the livestock to be raised and managed in the pig farming industry, and reliably obtains, from the accumulated data, the trace information from the raising environment of the livestock from the birth to the shipment.

While believed to allow unified management of the livestock raising environment of the livestock from the birth to the shipment, the technique fails to control and automatically process the livestock environment, and further fails to automatically change and achieve a most proper environment using the system. In addition, the technique has difficulty in achieving a most proper livestock environment based on the past raising records and actual values.

Japanese Unexamined Patent Publication No. 2015-167529 discloses a technique related to a livestock animal management site. A system for managing individual livestock animals includes: an information terminal device including a mobile information terminal device and a personal computer; a central management device including a web server, an application server and a database server; and a network for connecting these devices. On the website owned by the web server, activities performed for livestock animals and comments can be input and output in chronological order. In addition, the transition of the number and details of the livestock animals and reference data for management policies can be output.

This configuration allows unified management of the livestock animals on the livestock animal management site. By effectively using individual information on the livestock animals, the state of the entire raising area can be grasped and further, reference materials for management policies can be obtained.

With this technique, the operation of the livestock animal management site is believed to facilitate the management of the livestock animals. Such the site operation is however hardly applied to automatically manage, adjust, and control the environment such as barns most properly for the livestock, and is thus insufficient. This technique is also not suitable to achieve a most proper livestock environment based on the past raising records and actual values.

There has been thus a demand for developing an automatic livestock management system that achieves a most proper livestock environment by managing and controlling the livestock environment in real time, and preparation of a more desirable livestock environment utilizing past raising records and actual values.

### CITATION LIST

### PATENT DOCUMENTS

PATENT DOCUMENT 1: Japanese Unexamined Patent Publication No. 2013-247941
PATENT DOCUMENT 2: Japanese Unexamined Patent Publication No. 2015-167529

### SUMMARY OF THE INVENTION

### TECHNICAL PROBLEM

It is an objective of the present invention to provide a system for managing livestock, and more particularly to an automatic livestock management system that achieves a most proper livestock environment and efficient livestock farming by automatically managing and controlling a livestock environment based on various numerical values obtained from various measuring devices and by utilizing past raising records and actual values.

### SOLUTION TO THE PROBLEM

The invention is set out in the appended claims.

In order to achieve the objective, an automatic livestock management system according to the present invention is for automatically managing livestock and achieving a proper livestock raising environment. The automatic livestock management system includes: a management server configured to manage the system; an operation means including a mobile terminal or a personal computer for inputting external information to the management server and instructing processing; a measuring device group for sequentially obtaining various raising environment information on a barn; a device group for the barn to adjust the raising environment in the barn; and the management server including: a livestock management database for storing the external information input by the operation means and the raising environment information obtained by the measuring device group; an analysis unit configured to extract the external information and the raising environment information stored in the livestock management database and performs arithmetic processing to generate a raising environment parameter; and a control processing unit for generating a control parameter based on the raising environment parameter and the raising environment information sequentially obtained, the automatic livestock management system controlling the device group in the barn to be controlled, using: the analysis unit generating the raising environment parameter based on the external information and the raising environment information and transmitting the raising environment parameter and the raising environment information to the control processing unit periodically and/or upon instruction of a user; and the control processing unit sequentially and automatically determining the control parameter based on the raising environment parameter and the raising environment information that is sequentially obtained and variable, generating a control signal for the device group based on the control parameter, and transmitting the control signal.

The automatic livestock management system is configured such that the operation means inputs and corrects the raising environment parameter and/or the control parameter.

The external information includes at least a raising record, a treatment record, and a shipping record that are quantified.

The raising environment information includes at least one or more of temperature information, humidity information, atmospheric pressure information, air flow information, odor information, light quantity information, sound information, feeding amount information, drinking water consumption information, body temperature information, body weight information, or activity amount information. The measuring device group includes at least one or more of a temperature measuring device, a humidity measuring device, an atmospheric pressure measuring device, an air flow measuring device, an odor measuring device, a light quantity measuring device, a sound measuring device, a feeding amount measuring device, a drinking water consumption measuring device, a body temperature measuring device, a body weight measuring device, or an activity amount measuring device.

The device group includes at least one or more of a feeder, a drinking water server, a heater, a cooler, a ventilator, an illumination device, or a window opening and closing device.

The automatic livestock management system further includes an output means configured to visibly display and output the external information, the raising environment information, the raising environment parameter, and the control parameter.

The management server further includes a notification unit capable of issuing an alert. The analysis unit extracts the external information and the raising environment information stored in the livestock management database and performs arithmetic processing to generate the raising environment parameter, and analyzes a relationship between a disease occurrence and the raising environment parameter based on the raising record and the treatment record to generate a predictive parameter of the disease occurrence. The control processing unit determines a monitoring parameter based on the predictive parameter of the disease occurrence, and issues the alert through the notification unit upon detection of a numerical value exceeding a set threshold of the monitoring parameter based on the raising environment information sequentially obtained.

The livestock farming includes pig farming. The barn is a pigpen.

### ADVANTAGES OF THE INVENTION

With the configuration as described above in detail, the present invention has the following advantages.
1. The system includes the measuring device group for obtaining raising environment information, and the device group for adjusting the raising environment. With this configuration, the system immediately obtains the environment information on the barn, and controls the device group based on the obtained information. In the configuration, the analysis unit generates raising environment parameters, and the control processing unit then generates control parameters based on the generated parameters. Accordingly, the system controls and manages the device group based on stable, most proper values updated sequentially and automatically.
2. The operation means enables input or correction of the raising environment parameters or the control parameters. The system achieves a proper livestock environment based on the detailed control of the device group or the experiences.
3. In the configuration, the quantified raising, treatment, and shipping records are input as the external information. The system thus reflects the raising environment parameters as quantified information, and performs control and management more suitable for the actual state.
4. In the configuration, the raising environment information includes the temperature information or other information. The system thus manages and controls the barn, for example, in detail.
5. In the configuration, the measuring device group includes the temperature measuring device, for example. The system thus immediately obtains all types of information on the barn, for example.
6. In the configuration, the device group includes the feeder, for example. The barn environment is controlled using the control processing unit by controlling all types of devices.
7. The raising environment parameters and the control parameters are visible by the output means. This allows a check of the automatically set parameter values and detailed control such as adjustment of the numerical values.
8. The relationship between the disease occurrence and the raising environment parameters is analyzed based on the raising and treatment records. This allows generation of the predictive parameters of a disease occurrence and alert issuance using the notification unit. If any predictive factor of the disease occurrence is found, the disease occurrence can be immediately detected or reduced in advance.
9. The automatic livestock management system manages hardly manageable pig farming easily and accurately.

### DESCRIPTION OF EMBODIMENTS

Now, an automatic livestock management system according to the present invention will be described in detail based on an embodiment shown in the drawings. FIG. 1 is a conceptual diagram of the automatic livestock management system according to the present invention. FIG. 2 is a configuration diagram at the time of obtaining raising environment parameters. FIG. 3 is a configuration diagram showing a steady state.

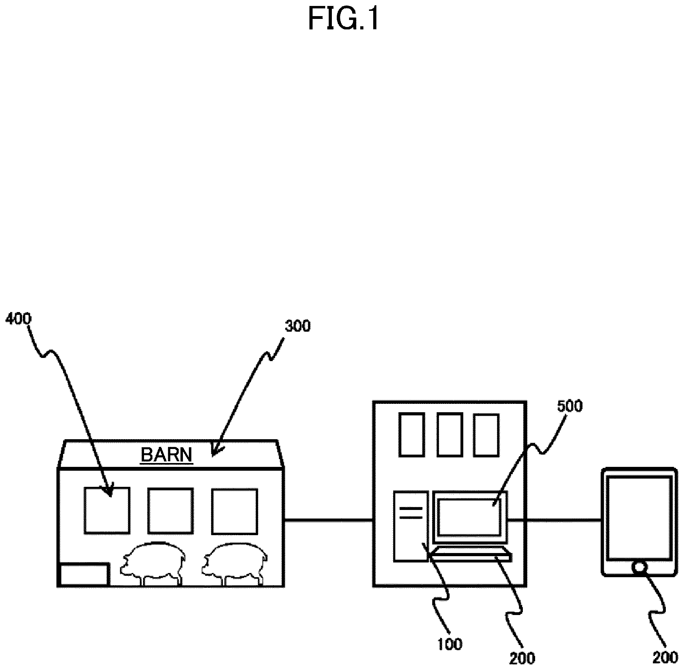

As shown in FIG. 1, an automatic livestock management system 1 according to the present invention is for livestock farming, and includes a management server 100, an operation means 200, a measuring device group 300, and a device group 400. The system 1 automatically manages and controls the livestock environment such as a barn in the livestock industry.

The management server 100 is a core device of the automatic livestock management system 1 according to the present invention, and is a main server for managing the system that performs various types of arithmetic processing for registering, storing, managing, and operating various types of information on the livestock environment. The management server 100 may be a single unit. Alternatively, if the automatic livestock management system 1 is used in a large-scale raising environment in which the management server 100 requires high-level processing capabilities and high performance, a plurality of server computers may perform distributed processing, for example.

A server or a server group may be located near a control room (not shown) in the barn, for example. However, in view of the safety of data management, simple operation and maintenance of the system, and further, analysis of accumulated data, and application of the data to other livestock farms; a data management method may be used which employs a cloud computing technique with a cloud server.

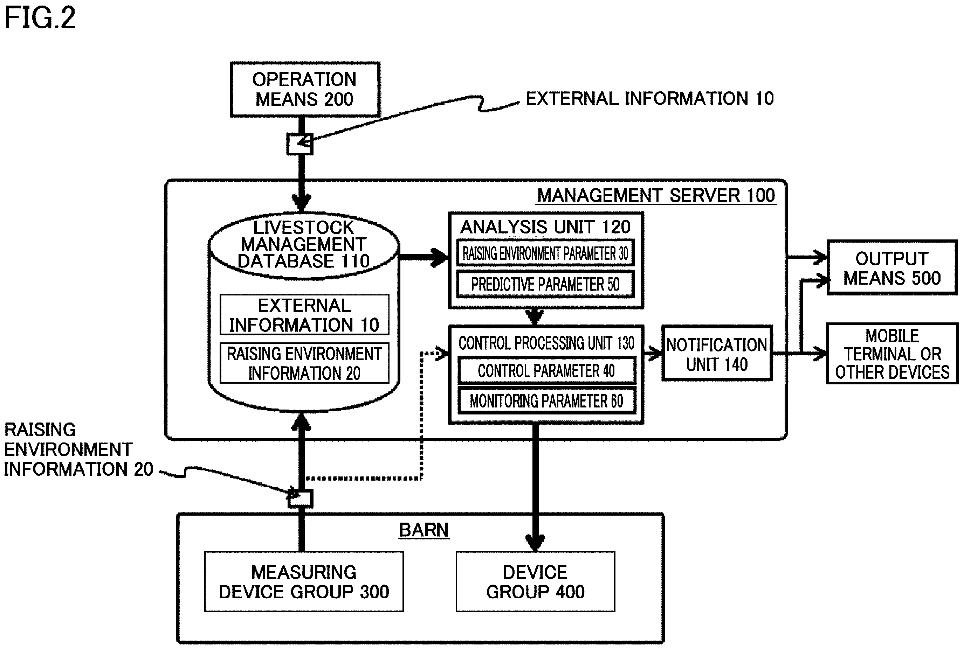

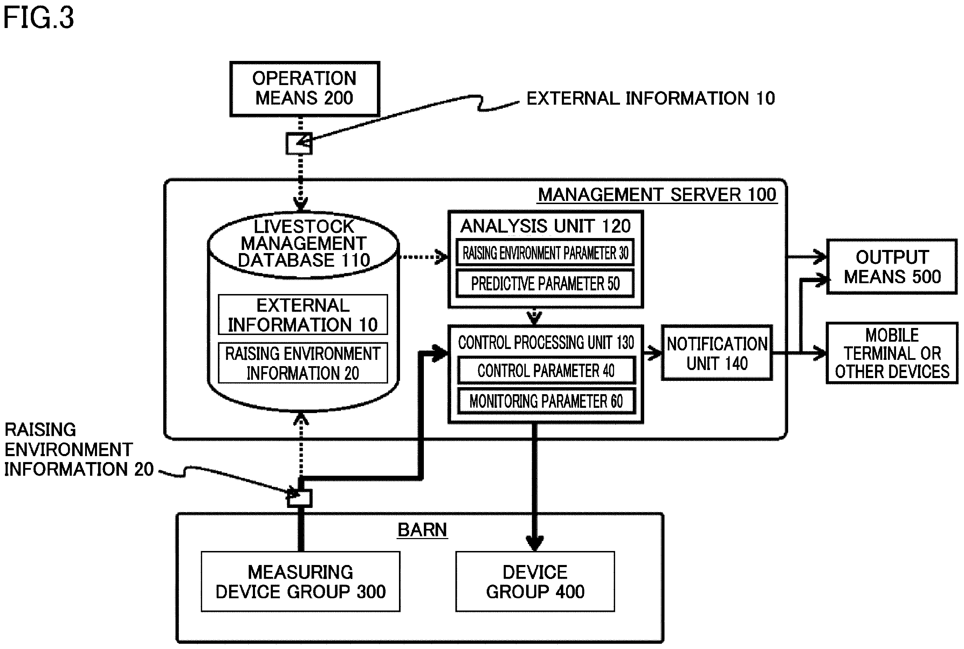

The operation means 200 is for making processing instructions to the management server 100. As shown in FIGS. 2 and 3, the operation means 200 mainly inputs external information 10 used for managing and controlling the barn or other environment to the management server 100, and issues the commands for processing the external information 10. The external information 10 is obtained by collecting, organizing, and quantifying data on the raising results of the barn, the livestock animals, and other factors to be managed and controlled by the automatic livestock management system 1. Such numerical information is input as parameters to the management server 100 so as to be used for management and control of the environment such as the barn.

Conceivable examples of the external information 10 include the information obtained by collecting, aggregating, and analyzing livestock data in a livestock farm, and the information obtained by analyzing big data on livestock farming utilizing artificial intelligence or statistical analysis and arranging the analysis results as numerical information. The external information 10 is not limited thereto.

In this embodiment, as shown in FIG. 1, the operation means 200 is a mobile terminal or a personal computer including one or more tablet PCs, smartphones, or other devices connected to the management server 100 via a LAN or the Internet, but is not limited thereto. For example, the management server 100 and the operation means 200 may be integrated to directly operate the management server 100. Alternatively, a computer that directly operates the management server 100 may be placed and accessed by the operation means 200 including one or more personal computers to indirectly operate the management server 100. Needless to mention, the management server 100 and the operation means 200 may be arranged at remote locations using a line such as the Internet and used from remote locations.

The measuring device group 300 includes a plurality of devices for sequentially obtaining various raising environment information 20 on the barn. The measuring device group 300 includes a plurality of types of measuring devices arranged in or around the barn or other places, or directly on the livestock animals. Mainly used are various sensors. The measuring devices including these various sensors sequentially obtain and quantify various information, such as the temperature and the humidity, on the raising environment such as the barn, as the raising environment information 20. The raising environment information 20 is, as the parameters, input to the management server 100 and used to manage and control the environment such as the barn.

The device group 400 includes a plurality of types of devices for adjusting the raising environment in the barn. As shown in FIG. 1, the device group 400 includes various types of devices such as an air conditioner and illumination device arranged in and around the barn. The devices are controlled by the management server 100 based on control information obtained from various parameters to control the environment such as the barn.

As shown in FIGS. 2 and 3, the management server 100 includes a livestock management database 110, an analysis unit 120, and a control processing unit 130. The livestock management database 110 is for storing the external information 10 input by the operation means 200, and the raising environment information 20 obtained by the measuring device group 300. The livestock management database 110 is stored in a storage device (not shown) of the management server 100. Being a relational database in this embodiment, the livestock management database 110 is not limited thereto and may be any one of other various databases.

The analysis unit 120 extracts the external information 10 and raising environment information 20 stored in the livestock management database 110 and performs arithmetic processing to generate raising environment parameters 30. In this embodiment, the analysis unit 120 is software. An arithmetic device (not shown) incorporated into the management server 100 reads and executes of a file for executing the software stored in a storage device, extracts the data stored in the livestock management database 110, and performs the arithmetic processing to generate the raising environment parameters 30.

Based on the raising environment parameters 30 generated by the analysis unit 120, and the sequentially obtained raising environment information 20, the control processing unit 130 sequentially and automatically determines control parameters 40. After that, based on the determined control parameters 40, the control processing unit 130 generates control signals for the device group 400 arranged in the barn, and transmits the control signals for instruction. In this embodiment, the control processing unit 130 is software. The arithmetic device incorporated into the management server 100 reads and executes of a file for executing the software stored in the storage device to generate the control parameters 40 and the control signals for the device group 400.

In another embodiment of the analysis unit 120 and the control processing unit 130, a computer is conceivable which includes an arithmetic device, a storage device, and other devices outside the management server 100 to place the analysis unit 120 and the control processing unit 130. Any configuration may be selected in accordance with the scale of the automatic livestock management system 1.

Details of processing of the automatic livestock management system 1 will be described. In the automatic livestock management system 1, as shown in FIG. 2, the analysis unit 120 periodically generates the raising environment parameters 30 based on the external information 10 and the raising environment information 20, and transmits the raising environment parameters 30 to the control processing unit 130.

For example, past livestock raising, treatment, shipping, and other records are input as the external information 10 to the livestock management database 110 by the operation means 200 at any time. In addition, the temperature, humidity, atmospheric pressure, air flow, odor, light quantity, and sound volume in the barn; the amount of feeding the livestock; the drinking water consumption, the body temperature, the body weight, the activity amount of the livestock; and other conditions of the livestock are periodically obtained as the raising environment information 20 by the measuring device group 300 and are similarly input to the livestock management database 110.

The analysis unit 120 extracts such information from the livestock management database 110, and then derives and generates the raising environment parameters 30. The raising environment parameters 30 are various basic parameters serving as control target values of the device group 400 most suitable for use in controlling the device group 400. In the derivation of these parameters, for example, various information such as the temperature, the humidity, and the atmospheric pressure for obtaining most proper raising efficiency indexes such as the conception rate, the survival rate after the delivery, and the carcass weight. Alternatively, the correlations between the values are derived. Through the derivation, maximum or most suitable raising environment parameters are predicted to achieve most proper raising environment parameters 30.

For example, in the livestock framing, particularly in the pig farming, keeping the body temperatures of piglets is important for stable raising. In this case, in the derivation of the raising environment parameters 30, most proper values of the raising environment parameters 30 for obtaining a most proper environment are calculated from various information such as the temperature, humidity, atmospheric pressure, and air flow in the barn; and the drinking water consumption and body temperature of the livestock.

While AI is employed to derive the raising environment parameters 30 in this embodiment, the present invention is not limited thereto. The external information 10 and the raising environment information 20 may be periodically obtained. Alternatively, one or both types of the information may be obtained at an any time according to a user instruction.

Next, as shown in FIG. 2, the generated raising environment parameters 30 are transmitted to the control processing unit 130. The control processing unit 130 that has received the raising environment parameters 30 determines the control parameters 40 based on the raising environment parameters 30. The control parameters 40 are various parameters for controlling the device group 400, and are used for controlling the operations of a feeder, a drinking water server, a heater, a cooler, a ventilator, illumination devices, and a window opening and closing device, for example.

Specifically, the control processing unit 130 obtains the raising environment information 20 such as the current temperature, humidity, atmospheric pressure, air flow, odor, light quantity, and sound volume in the barn; the amount of feeding the livestock; and the drinking water consumption, body temperature, body weight, and activity amount of the livestock from the measuring device group 300 sequentially and/or at any time determined by the user. The control processing unit 130 then sequentially and automatically determines the control parameters 40 based on the received raising environment parameters 30 and the raising environment information 20 obtained from the measuring device group 300. Based on the determined control parameters 40, the control processing unit 130 performs the processing of generating and transmitting the control signals for the device group 400. Accordingly, the control processing unit 130 instructs and controls the operation of the device group 400 including the feeder, the drinking water server, the heater, the cooler, the ventilator, the illumination devices, and the window opening/closing device in the barn to be controlled.

For example, assume that the analysis unit 120 determines that the most proper temperature (target value) of the barn is 25°C as one of the raising environment parameters 30 and the current temperature (measured value) of the barn obtained as the raising environment information 20 is 30°C. In this case, the control processing unit 130 determines an opening (control value) of 50%, as one of the control parameters 40, which is the target opening degree of the windows for lowering the temperature by 5°C. At this time, the control processing unit 130 comprehensively determines the control parameters 40 for the devices in the device group 400 in view of controlling the other raising environment information 20 and the other devices in the device group 400.

According to the configuration described above, in this embodiment, the analysis unit 120 determines the raising environment parameters 30. After that, as shown in FIG. 3, the control processing unit 130 derives the control parameters 40 based on the raising environment parameters 30 and the variable raising environment information 20 from the measuring device group 300 without performing the analysis processing by the analysis unit 120. Using these control parameters 40, the device group 400 can be controlled continuously. There is thus no need to individually control the devices in the device group 400 while calculating the most proper parameters using the analysis unit 120 each time. Rationalization of the environment management and control of the barn, higher efficiency of the devices, and reduction of the loads, for example, are achieved.

The external information 10 input to the livestock management database 110 is updated periodically. Once this update is performed, as shown in FIG. 2, the analysis unit 120 recalculates the raising environment parameters 30. After that, as shown in FIG. 3, the control processing unit 130 derives new control parameters 40 from the recalculated raising environment parameters 30 and the raising environment information 20, and instructs and controls the operation of the device group 400 using the updated control parameters 40. By repeating this operation, by the automatic livestock management system 1 according to the present invention automatically and continuously manages the livestock environment.

In another embodiment of the present invention, the raising environment parameters 30 and/or the control parameters 40 may be directly input to the analysis unit 120 or the control processing unit 130, or directly corrected by the operation means 200. This configuration allows detailed control of the devices in the device group 400 and achieves a proper livestock environment based on experience.

In this embodiment, the external information 10 includes at least numerical raising, treatment, and shipping records. This configuration allows reflection of these records as quantified information in the raising environment parameters 30, which enables management and control more suitable for the actual state.

In this embodiment, the raising environment information 20 includes at least one or more of temperature information, humidity information, atmospheric pressure information, air flow information, odor information, light quantity information, sound information, feeding amount information, drinking water consumption information, body temperature information, body weight information, or activity amount information. With this configuration, the environment such as the barn can be managed and controlled in detail by controlling the device group 400 in detail.

In this embodiment, the measuring device group 300 includes at least one or more of a temperature measuring device, a humidity measuring device, an atmospheric pressure measuring device, an air flow measuring device, an odor measuring device, a light quantity measuring device, a sound measuring device, a feeding amount measuring device, a drinking water consumption measuring device, a body temperature measuring device, a body weight measuring device, or an activity amount measuring device. The measuring device group 300 includes various sensors. This configuration allows immediate obtainment of all types of information on the barn, for example. In this embodiment, these various measuring devices include a temperature sensor, a humidity sensor, an atmospheric pressure sensor, an air flow sensor, an odor sensor, an optical sensor, a sound sensor, a feeding amount sensor, a drinking water consumption sensor, and temperature, weight, and acceleration sensors attached to individual livestock animals, for example. The measuring devices are not limited thereto and may have other configurations.

In this embodiment, the device group 400 includes at least one or more of a feeder, a drinking water server, a heater, a cooler, a ventilator, illumination devices, or a window opening and closing device. With this configuration, the control processing unit 130 adjusts the barn environment in detail by controlling all types of devices.

In this embodiment, as shown in FIG. 1, the automatic livestock management system 1 according to the present invention includes an output means 500. The output means 500 is a device for visibly displaying and outputting the external information 10, the raising environment information 20, the raising environment parameters 30, and the control parameters 40. In this embodiment, the output means 500 includes various devices such as a monitor connected to a personal computer or a server, but is not limited thereto. The output means 500 may output the various information to mobile terminals or other devices connected outside via wired or wireless communications.

The management server 100 may include a notification unit 140. The notification unit 140 is a member capable of issuing alerts to the outside on the occurrence of a problem such as an abnormal value on the server. In this embodiment, the notification unit 140 is software stored in the storage device of the management server 100 and configured to transmit alerts to the outside. An arithmetic device reads the software from the storage device, transmits alert information to the output means 500 or external mobile terminals or other devices. The receiver displays the alerts.

As described above, the analysis unit 120 extracts the external information 10 and raising environment information 20 stored in the livestock management database 110 and then performs the arithmetic processing to generate the raising environment parameters 30. In addition, the analysis unit 120 may generate predictive parameters 50 of a disease occurrence by analyzing the relationship between the disease occurrence and the raising environment parameters 30 based on the raising and treatment records. The predictive parameters 50 of a disease occurrence are various basic parameters that are predictive values as possible causes, such as the temperature, the humidity, the air flow, the odor, and the body temperature, for the disease such as an infectious disease in livestock, for example. In the derivation of these parameters, for example, the relationship between the disease information on the livestock and various information is analyzed to predict an environment which tends to cause a disease and derive the predictive parameters 50 of the disease occurrence. The disease information includes occurrence dates, occurrence numbers, details, and treatment records input as the external information 10. The various information includes the temperature, humidity, and atmospheric pressure input as the raising environment information 20.

Based on the derived predictive parameters 50 of the disease occurrence, the control processing unit 130 determines monitoring parameters 60. The monitoring parameters 60 are thresholds of the various information such as the temperature, the humidity, and the atmospheric pressure. The control processing unit 130 checks the raising environment information 20 sequentially obtained and transmitted by the measuring device group 300, and compares and inspects whether or not the values exceed the thresholds set as the monitoring parameters 60. In the inspection, whether or not the various information such as the temperature, the humidity, and the atmospheric pressure exceeds a threshold may be detected by any calculation method. The method includes the cases where any of the various information exceeds a threshold, where all the various information exceeds the thresholds, and where the various information is weighted and the weighted information exceeds a threshold calculated in advance.

Once a numerical value exceeding any of the thresholds set as the monitoring parameters 60 is detected, that is, if any of the monitoring parameters 60 is determined to be a possible cause of a disease, an alert is issued to the output means 500, an external mobile terminal, or other devices owned by a farmer or a veterinarian in charge, for example, through the notification unit 140. This configuration allows immediate prediction and detection of a possible occurrence of a disease, once a predictive factor of a disease occurrence is found.

The livestock farming managed by the automatic livestock management system 1 according to the present invention particularly includes pig farming. The barn is a pigpen. For example, in the case of treating cattle as livestock, the cattle is raised at a lower raising density and managed one by one in detail, which leads to easier collection of individual data. In the case of poultry farming, since the poultry is raised at a higher raising density but each has a smaller size, which allows statistical collection of data as a flock.

However, since pigs are raised at a higher raising density but each has a larger size, the pig farming has difficulty in collecting data and forces manual recording works by a lot of workers in the present circumstances. In particular, the pig farming industry has the problem of labor shortage and requires automatization. However, for the reasons described above, the pig farming industry has difficulty in improving techniques of collecting data and achieving a proper pig farming environment. In addition, since the pigs are raised under a closed, high density environment with a high density, there is a high risk of infection spread. With the configurations, the present invention allows easier and accurate raising of pigs that are difficult to control, and automatic and easier achievement of a proper raising environment particularly in the pig farming industry.

Next, an outline of an embodiment of the automatic livestock management system 1 according to the present invention in pig farming will be described. As one embodiment, the raising environment information 20 on the temperature, the humidity, and the atmospheric pressure is periodically obtained from the measuring device group 300 in a pigpen and stored in the livestock management database 110. In addition, the number of intrapartum stillborn piglets is stored as the external information 10 in the livestock management database 110.

From the large amount of obtained data, the analysis unit 120 derives the conditions such as the temperature, humidity, and atmospheric pressure that reduce the number of intrapartum stillborn piglets as much as possible through the analysis using the AI to generate the raising environment parameters 30. For example, depending on the atmospheric pressure, the most proper points of temperature and humidity may vary. Based on the resultant raising environment parameters 30, the analysis unit 120 generates and transmits the control parameters 40 to the control processing unit 130. In addition, the analysis unit 120 receives the inputs from the measuring device group 300 to control the opening and closing of the air conditioner, the ventilator, and the windows.

As another embodiment, temperature data is periodically obtained from the measuring device group 300 in the pigpen, and the feed consumption per type and the drinking water are obtained from the sensors (or the feeding amount measuring device and the drinking water consumption measuring device) attached to each pig, and registered in the livestock management database 110. As the external information 10, the shipped carcass weight, the meat quality, and the feed information (e.g., the type, the composition ratio, etc.) are registered in the livestock management database 110.

From the large amount of obtained data, the analysis unit 120 derives the conditions such as the temperature, feed consumption, feed ingredients, and drinking water consumption that increase the carcass weight for shipment and the meat quality as much as possible through the analysis using the AI to generate the raising environment parameters 30. Based on the resultant raising environment parameters 30, the analysis unit 120 generates and transmits the control parameters 40 to the control processing unit 130. In addition, the analysis unit 120 receives the inputs from the measuring device group 300 to control the opening and closing of the air conditioner, the ventilator, and the windows as well as the amount of supplying feed by the feeder and drinking water by the drinking water server.

### BRIEF DESCRIPTION OF THE DRAWINGS

FIG. 1 is a conceptual diagram of an automatic livestock management system according to the present invention.
FIG. 2 is a configuration diagram at the time of obtaining raising environment parameters.
FIG. 3 is a configuration diagram showing a steady state.

### DESCRIPTION OF REFERENCE CHARACTERS

- 1: Automatic Livestock Management System
- 10: External Information
- 20: Raising Environment Information
- 30: Raising Environment Parameters
- 40: Control Parameters
- 50: Predictive Parameters of Disease Occurrence
- 60: Monitoring Parameters
- 100: Management Server
- 110: Livestock Management Database
- 120: Analysis Unit
- 130: Control Processing Unit
- 140: Notification Unit
- 200: Operation Means
- 300: Measuring Device Group
- 400: Device Group
- 500: Output Means

## Claims

1. An automatic livestock management system (1) for automatically managing livestock farming and achieving a proper raising environment, the automatic livestock management system (1) comprising:
a management server (100) configured to manage the system;
an operation means (200) including a mobile terminal or a personal computer configured for inputting external information (10) to the management server and instructing processing;
a measuring device group (300) configured for sequentially obtaining various raising environment information (20) on a barn;
a device group (400) for the barn configured to adjust the raising environment in the barn;
the management server (100) including:
a livestock management database (110) configured for storing the external information (10) input by the operation means (200) and the raising environment information (20) obtained by the measuring device group (300);
an analysis unit (120) comprising instructions which; when executed by the analysis unit (120), causes the analysis unit (120) to extract the external information (10) and the raising environment information (20) stored in the livestock management database and to perform arithmetic processing to generate or update the raising environment parameter (30); and
a control processing unit (130) comprising instructions which, when executed by the control processing unit (130), causes the control processing unit (130) to generate a control parameter (40) based on the raising environment parameter (30) and the raising environment information (20) sequentially obtained,
the automatic livestock management system (1) controlling the device group (400) in the barn to be controlled,
the management server (100) being configured to operate in a first mode, in which raising environment parameters are obtained, and in a second steady state mode, wherein
in the first operating mode in which raising environment parameters are obtained, the analysis unit (120) transmit the raising environment parameter (30) generated or updated to the control processing unit (130) periodically and/or upon instruction of a user to generate a new control parameter (40) and generate a control signal;
in the second operating mode where said system is in a steady state, the control processing unit (130) sequentially and automatically generates the control parameter (40) based on the raising environment parameter (30) generated by the analysis unit (120) and the raising environment information (20) that is sequentially obtained and variable without performing the analysis processing by the analysis unit (120), continuously generates a control signal for the device group (400) based on the control parameter (40), and transmits the control signal;
the said external information (10) including at least a raising record, a treatment record, and a shipping record that are quantified.

2. The automatic livestock management system of claim 1, wherein
the management server (100) is configured to allow the raising environment parameters (30) and/or the control parameters (40) to be directly input to the analysis unit (120) or the control processing unit (130), or directly corrected by the operation means (200).

3. The automatic livestock management system of claim 1, wherein
the raising environment information (20) includes at least one or more of temperature information, humidity information, atmospheric pressure information, air flow information, odor information, light quantity information, sound information, feeding amount information, drinking water consumption information, body temperature information, body weight information, or activity amount information.

4. The automatic livestock management system of claim 1, wherein
the measuring device group (300) includes at least one or more of a temperature measuring device, a humidity measuring device, an atmospheric pressure measuring device, an air flow measuring device, an odor measuring device, a light quantity measuring device, a sound measuring device, a feeding amount measuring device, a drinking water consumption measuring device, a body temperature measuring device, a body weight measuring device, or an activity amount measuring device.

5. The automatic livestock management system of claim 1, wherein
the device group (400) includes at least one or more of a feeder, a drinking water server, a heater, a cooler, a ventilator, an illumination device, or a window opening and closing device.

6. The automatic livestock management system of claim 1, further comprising:
an output means (500) configured to visibly display and output the external information (10), the raising environment information (20), the raising environment parameter (30), and the control parameter (40).

7. The automatic livestock management system of claim 1, wherein
the management server (100) further includes a notification unit (140) comprising instructions which, when executed by the notification unit (140), causes the notification unit (140) to issue an alert,
the analysis unit (120) comprises instructions which, when executed by the analysis unit (120), causes the analysis unit (120) to analyze a relationship between a disease occurrence and the raising environment parameter (30) based on the raising record and the treatment record to generate a predictive parameter (50) of the disease occurrence, and
the control processing unit (130) comprises instructions which, when executed by the control processing unit (130), causes the control processing unit (130) to determine a monitoring parameter (60) based on the predictive parameter (50) of the disease occurrence, and to issue the alert through the notification unit (140) upon detection of a numerical value exceeding a set threshold of the monitoring parameter (60) based on the raising environment information (20) sequentially obtained.

8. The automatic livestock management system of claim 1, wherein
the livestock farming includes pig farming, and the barn is a pigpen.

## Patentansprüche

1. Automatisches Viehverwaltungssystem (1) zum automatischen Verwalten der Viehzucht und zum Erreichen einer geeigneten Aufzuchtumgebung, das automatische Viehverwaltungssystem (1) umfassend:
einen Verwaltungsserver (100), der für die Verwaltung des Systems konfiguriert ist;
ein Operationsmittel (200), das ein mobiles Terminal oder einen Personalcomputer einschließt, der so konfiguriert ist, dass er externe Informationen (10) in den Verwaltungsserver eingibt und die Verarbeitung anweist;
eine Messvorrichtungsgruppe (300), die so konfiguriert ist, dass sie nacheinander verschiedene Informationen über die Aufzuchtumgebungsinformationen (20) in einem Stall ermittelt;
eine Vorrichtungsgruppe (400) für den Stall, die so konfiguriert ist, dass sie die Aufzuchtumgebung im Stall anpasst;
wobei der Verwaltungsserver (100) Folgendes einschließt:
eine Viehverwaltungsdatenbank (110), die so konfiguriert ist, dass sie die von den Operationsmitteln (200) eingegebenen externen Informationen (10) und die von der Messvorrichtungsgruppe (300) ermittelten Aufzuchtumgebungsinformationen (20) speichert;
eine Analyseeinheit (120), die Anweisungen umfasst, die;
wenn sie von der Analyseeinheit (120) ausgeführt wird, die Analyseeinheit (120) veranlassen, die externen Informationen (10) und die Aufzuchtumgebungsinformationen (20), die in der Viehverwaltungsdatenbank gespeichert sind, zu extrahieren und eine arithmetische Verarbeitung auszuführen, um die Aufzuchtumgebungsparameter zu erstellen oder zu aktualisieren (30); und
eine Steuerungsverarbeitungseinheit (130), die Anweisungen umfasst, die, wenn sie von der Steuerungsverarbeitungseinheit (130) ausgeführt werden, die Steuerungsverarbeitungseinheit (130) veranlassen, einen Steuerungsparameter (40) basierend auf dem Aufzuchtumgebungsparameter (30) und den Aufzuchtumgebungsinformationen (20), die sequentiell erhalten werden, zu erzeugen,
wobei das automatische Viehverwaltungssystem (1) die Vorrichtungsgruppe (400) in dem zu steuernden Stall steuert,
wobei der Verwaltungsserver (100) so konfiguriert ist, dass er in einem ersten Modus, in dem Aufzuchtumgebungsparameter erhalten werden, und in einem zweiten, stationären Modus arbeitet,
wobei die Analyseeinheit (120) in der ersten Betriebsart, in der Aufzuhtumgebungsparameter ermittelt werden, den erzeugten oder aktualisierten Aufzuhtumgebungsparameter (30) periodisch und/oder auf Anweisung eines Benutzers an die Steuerungsverarbeitungseinheit (130) sendet, um einen neuen Steuerungsparameter (40) zu erstellen und ein Steuerungssignal zu erzeugen;
in der zweiten Betriebsart, in der sich das System in einem stabilen Zustand befindet, die Steuerungsverarbeitungseinheit (130) sequentiell und automatisch den Steuerungsparameter (40) basierend auf dem von der Analyseeinheit (120) erzeugten Aufzuhtumgebungsparameter (30) und den Aufzuhtumgebungsinformationen (20) erzeugt, die sequentiell erhalten werden und variabel sind, ohne die Analyseverarbeitung durch die Analyseeinheit (120) durchzuführen, kontinuierlich ein Steuersignal für die Vorrichtungsgruppe (400) basierend auf dem Steuerungsparameter (40) erzeugt und das Steuerungssignal überträgt;
die besagten externen Informationen (10) mindestens eine Aufzuchtaufzeichnung, eine Behandlungsaufzeichnung und eine Versandaufzeichnung einschließen, die quantifiziert sind.

2. Automatisches Viehverwaltungssystem nach Anspruch 1, wobei
der Verwaltungsserver (100) so konfiguriert ist, dass die Aufzuhtumgebungsparameter (30) und/oder die Steuerungsparameter (40) direkt in die Analyseeinheit (120) oder die Steuerungsverarbeitungseinheit (130) eingegeben oder direkt durch die Operationsmittel (200) korrigiert werden können.

3. Automatisches Viehverwaltungssystem nach Anspruch 1, wobei
die Aufzuchtumgebungsinformationen (20) mindestens Temperaturinformationen, Feuchtigkeitsinformationen, Informationen über den atmosphärischen Druck, Informationen über den Luftstrom, Geruchsinformationen, Informationen über die Lichtmenge, Geräuschinformationen, Informationen über die Fütterungsmenge, Informationen über den Trinkwasserverbrauch, Informationen über die Körpertemperatur, Informationen über das Körpergewicht oder Informationen über die Aktivitätsmenge einschließen.

4. Automatisches Viehverwaltungssystem nach Anspruch 1, wobei
die Vorrichtungsgruppe (300) mindestens eine Messvorrichtung für die Temperatur, eine Messvorrichtung für die Feuchtigkeit, eine Messvorrichtung für den atmosphärischen Druck, eine Messvorrichtung für den Luftstrom, eine Messvorrichtung für den Geruch, eine Messvorrichtung für die Lichtmenge, eine Messvorrichtung für das Geräusch, eine Messvorrichtung für die Futtermenge, eine Messvorrichtung für den Trinkwasserverbrauch, eine Messvorrichtung für die Körpertemperatur, eine Messvorrichtung für das Körpergewicht oder eine Messvorrichtung für die Aktivitätsmenge einschließt.

5. Automatisches Viehverwaltungssystem nach Anspruch 1, wobei
die Vorrichtungsgruppe (400) mindestens einen Fütterer, einen Trinkwasserserver, eine Heizung, eine Kühlvorrichtung, einen Ventilator, eine Beleuchtungsvorrichtung oder eine Vorrichtung zum Öffnen und Schließen der Fenster einschließt.

6. Automatisches Viehverwaltungssystem nach Anspruch 1, ferner umfassend:
ein Ausgabemittel (500), das so konfiguriert ist, dass es die externen Informationen (10), die Aufzuchtumgebungsinformationen (20), den Aufzuchtumgebungsparameter (30) und den Steuerungsparameter (40) sichtbar anzeigt und ausgibt.

7. Automatisches Viehverwaltungssystem nach Anspruch 1, wobei
der Verwaltungsserver (100) ferner eine Benachrichtigungseinheit (140) umfasst, die Anweisungen umfasst, die, wenn sie von der Benachrichtigungseinheit (140) ausgeführt wird, die Benachrichtigungseinheit (140) veranlasst, eine Warnung auszugeben,
die Analyseeinheit (120) Anweisungen umfasst, die, wenn sie von der Analyseeinheit (120) ausgeführt wird, die Analyseeinheit (120) veranlasst, eine Beziehung zwischen einem Vorkommen einer Krankheit und dem Aufzuhtumgebungsparameter (30) basierend auf dem Aufziehungsdatensatz und dem Behandlungsdatensatz zu analysieren, um einen Vorhersageparameter (50) des Vorkommens der Krankheit zu erstellen, und
die Steuerungsverarbeitungseinheit (130) Anweisungen umfasst, die, wenn die Steuerungsverarbeitungseinheit (130) die Steuerungsverarbeitungseinheit (130) veranlasst, durch die Bestimmung eines Steuerungsparameters (60) basierend auf dem Vorhersageparameter (50) des Vorkommens der Krankheit ausgeführt wird, und die Warnung durch die Benachrichtigungseinheit (140) bei Feststellung eines numerischen Wertes, der einen eingestellten Schwellenwert des Überwachungsparameters (60) überschreitet, basierend auf den sequenziell erhaltenen Informationen (20) der ansteigenden Umgebung, auszugeben.

8. Automatisches Viehverwaltungssystem nach Anspruch 1, wobei
die Viehhaltung die Schweinehaltung einschließt und der Stall ein Schweinestall ist.

## Revendications

1. Système de gestion automatique de bétail (1) pour la gestion automatique d'une exploitation de bétail et l'accomplissement d'un environnement d'élevage approprié, le système de gestion automatique de bétail (1) comprenant :
un serveur de gestion (100) configuré pour gérer le système ;
un moyen de fonctionnement (200) comportant un terminal mobile ou un ordinateur personnel configuré pour entrer des informations externes (10) dans le serveur de gestion et instruire un traitement ;
un groupe de dispositifs de mesure (300) configuré pour obtenir séquentiellement diverses informations d'environnement d'élevage (20) dans une étable ;
un groupe de dispositifs (400) pour l'étable configuré pour ajuster l'environnement d'élevage dans l'étable ;
le serveur de gestion (100) comportant :
une base de données de gestion de bétail (110) configurée pour stocker les informations externes (10) entrées par le moyen de fonctionnement (200) et les informations d'environnement d'élevage (20) obtenues par le groupe de dispositifs de mesure (300) ;
une unité d'analyse (120) comprenant des inscriptions qui, lorsqu'elles sont exécutées par l'unité d'analyse (120), amènent l'unité d'analyse (120) à extraire les informations externes (10) et les informations d'environnement d'élevage (20) stockées dans la base de données de gestion de bétail et à réaliser un traitement arithmétique pour générer ou mettre à jour le paramètre d'environnement d'élevage (30) ; et
une unité de traitement de commande (130) comprenant des instructions qui, lorsqu'elles sont exécutées par l'unité de traitement de commande (130) amènent l'unité de traitement de commande (130) à générer un paramètre de commande (40) sur la base du paramètre d'environnement d'élevage (30) et des informations d'environnement d'élevage (20) obtenues séquentiellement,
le système de gestion automatique de bétail (1) commandant le groupe de dispositifs (400) dans l'étable à commander,
le serveur de gestion (100) étant configuré pour fonctionner dans un premier mode, dans lequel des paramètres d'environnement d'élevage sont obtenus, et dans un second mode d'état stable, dans lequel
dans le premier mode de fonctionnement dans lequel des paramètres d'environnement d'élevage sont obtenus, l'unité d'analyse (120) transmet le paramètre d'environnement d'élevage (30) généré ou mis à jour à l'unité de traitement de commande (130) périodiquement et/ou sur instruction d'un utilisateur pour générer un nouveau paramètre de commande (40) et générer un signal de commande ;
dans le second mode de fonctionnement dans lequel ledit système est dans un état stable, l'unité de traitement de commande (130) génère séquentiellement et automatiquement le paramètre de commande (40) sur la base du paramètre d'environnement d'élevage (30) généré par l'unité d'analyse (120) et des informations d'environnement d'élevage (20) qui sont obtenues séquentiellement et variables sans réaliser le traitement d'analyse par l'unité d'analyse (120), génère continuellement un signal de commande pour le groupe de dispositifs (400) sur la base du paramètre de commande (40), et transmet le signal de commande ;
lesdites informations externes (10) comportant au moins un enregistrement d'élevage, un enregistrement de traitement et un enregistrement d'expédition qui sont quantifiés.

2. Système de gestion automatique de bétail selon la revendication 1, dans lequel
le serveur de gestion (100) est configuré pour permettre aux paramètres d'environnement d'élevage (30) et/ou aux paramètres de commande (40) d'être entrés directement dans l'unité d'analyse (120) ou dans l'unité de traitement de commande (130), ou d'être corrigés directement par le moyen de fonctionnement (200) .

3. Système de gestion automatique de bétail selon la revendication 1, dans lequel
les informations d'environnement d'élevage (20) comportent au moins une ou plusieurs parmi des informations de température, des informations d'humidité, des informations de pression atmosphérique, des informations de débit d'air, des informations d'odeur, des informations de quantité de lumière, des informations de son, des informations de quantité de nourriture, des informations de consommation d'eau potable, des informations de température de corps, des informations de poids de corps et des informations de quantité d'activité.

4. Système de gestion automatique de bétail selon la revendication 1, dans lequel
le groupe de dispositifs de mesure (300) comporte au moins un ou plusieurs parmi un dispositif de mesure de température, un dispositif de mesure d'humidité, un dispositif de mesure de pression atmosphérique, un dispositif de mesure de débit d'air, un dispositif de mesure d'odeur, un dispositif de mesure de quantité de lumière, un dispositif de mesure de son, un dispositif de mesure de quantité de nourriture, un dispositif de mesure de consommation d'eau potable, un dispositif de mesure de température de corps, un dispositif de mesure de poids de corps et un dispositif de mesure de quantité d'activité.

5. Système de gestion automatique de bétail selon la revendication 1, dans lequel
le groupe de dispositifs (400) comporte au moins un ou plusieurs parmi un distributeur de nourriture, un serveur d'eau potable, un chauffage, un refroidisseur, un ventilateur, un dispositif d'éclairage et un dispositif d'ouverture et de fermeture de fenêtre.

6. Système de gestion automatique de bétail selon la revendication 1, comprenant en outre :
un moyen de sortie (500) configuré pour afficher de manière visible et délivrer les informations externes (10), les informations d'environnement d'élevage (20), le paramètre d'environnement d'élevage (30) et le paramètre de commande (40).

7. Système de gestion automatique de bétail selon la revendication 1, dans lequel
le serveur de gestion (100) comporte en outre une unité de notification (140) comprenant des instructions qui, lorsqu'elles sont exécutées par l'unité de notification (140), amènent l'unité de notification (140) à émettre une alerte,
l'unité d'analyse (120) comprend des instructions qui, lorsqu'elles sont exécutées par l'unité d'analyse (120), amènent l'unité d'analyse (120) à analyser une relation entre une survenance de maladie et le paramètre d'environnement d'élevage (30) sur la base de l'enregistrement d'élevage et de l'enregistrement de traitement pour générer un paramètre prédictif (50) de la survenance de maladie, et
l'unité de traitement de commande (130) comprend des instructions qui, lorsqu'elles sont exécutées par l'unité de traitement de commande (130), amènent l'unité de traitement de commande (130) à déterminer un paramètre de surveillance (60) sur la base du paramètre prédictif (50) de la survenance de maladie et à émettre l'alerte par l'intermédiaire de l'unité de notification (140) à la détection d'une valeur numérique dépassant un seuil de consigne du paramètre de surveillance (60) sur la base des informations d'environnement d'élevage (20) obtenues séquentiellement.

8. Système de gestion automatique de bétail selon la revendication 1, dans lequel
l'exploitation de bétail comporte une exploitation de cochon, et l'étable est une porcherie.
